# EUROPÄISCHE PATENTSCHRIFT

(11) **EP 3 667 153 B1**
(45) Veröffentlichungstag und Bekanntmachung des Hinweises auf die Patenterteilung: **17.11.2021**
(21) Anmeldenummer: 20150019.6
(22) Anmeldetag: 12.06.2018
(51) Int. Cl.: F17C 5/06

(54) **SPÜLBARER DRUCKBEHÄLTER**
FLUSHABLE PRESSURE VESSEL
RÉSERVOIR SOUS PRESSION POUVANT ÊTRE RINCÉ

(43) Veröffentlichungstag der Anmeldung: 17.06.2020
(62) Teilanmeldung aus: 18177400.1
(73) Patentinhaber: NPROXX B.V., 6422 RK Heerlen (NL)
(72) Erfinder: Kronholz, Stephan, 52428 Jülich (DE); Kluge, Thomas, 52428 Jülich (DE); Ritzerfeld, Elmar, 52072 Aachen (DE); Titz, Erich Josef, 52353 Düren (DE)
(74) Vertreter: FARAGO Patentanwälte

(56) Entgegenhaltungen:
- WO-A1-2013/083155
- DE-A1-102004 014 010
- DE-A1-102012 200 554
- FR-A1- 2 935 774
- JP-A- 2002 181 295
- US-A- 5 022 442
- US-A- 5 758 796
- US-A- 5 813 429
- US-A1- 2014 097 098
- US-A1- 2015 345 708

## Beschreibung

### Gebiet der Erfindung

Die Erfindung betrifft einen Druckbehälter mit Spüllanze, einen Transportcontainer mit solchen Druckbehältern sowie ein Verfahren zur Befüllung dieses Druckbehälters und ein Verfahren zur Herstellung des Druckbehälters.

### Hintergrund der Erfindung

Der Markt für Druckbehälter, die mit Faserverbundmaterial verstärkt werden, wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, da ein Transport von Druckbehältern mit hohen Behältergewichten unnötig viel Energie verbraucht und daher zu hohe Transportkosen verursacht.

Gegenwärtig benutzte zylinderförmige Druckbehälter besitzen eine Verstärkungsschicht aus Faserverbundmaterial aus Fasern eingebettet in einem Matrixmaterial, die als Außenschicht mittels eines Wickelverfahrens auf einen Innenbehälter (der sogenannte Liner) des Druckbehälters, der als Wickelkern fungiert, aufgewickelt wird. Während der Innenbehälter beispielsweise die Gasdichtigkeit des Druckbehälters garantiert, verleiht die Verstärkungsschicht aus Faserverbundmaterial dem Druckbehälter die notwendige mechanische Stabilität. Bei den Druckbehältern des Typs 3 wird ein mechanischer Innenbehälter (metallischer Liner) z.B. aus Aluminium oder Stahl eingesetzt, bei Druckbehältern des Typs 4 ist der Innenbehälter (Liner) aus Kunststoff.

Die Offenlegungsschrift US 2015 / 345 708 A1 beschreibt ein Verfahren zum Befüllen von Kraftstofftanks, insbesondere von CNG-Kraftstofftanks. Das verbessert die Wärmeabgabe, wenn der Kraftstofftank bei einer Temperatur gefüllt wird, die niedriger ist als die ohne das Verfahren. Die Drucksensorlogik an einer Tankstelle ist weniger anfällig für Fehler bei der Messung der Kraftstoffmasse im Tank, sodass der Tank genauer und vollständiger gefüllt werden kann. Um die Wärmeabgabe zu verbessern, kann der Kraftstofftank mit einer Wärmesenke versehen sein, um die Wärmeübertragung vom Inneren des Kraftstofftanks zum Äußeren passiv zu erleichtern. Alternativ oder in Kombination kann der Kraftstofftank mit einem Kraftstoffströmungskanal versehen sein, durch den Kraftstoff aus dem Kraftstofftankinneren zirkuliert. Der Kraftstoffströmungskanal kann aktiv mit einem Lüfter oder einem Wasserkühlsystem gekühlt werden.

Druckbehälter werden mit Füllgas gefüllt, das einen gewünschten Reinheitsgrad haben soll. Da verbrauchte Druckbehälter in der Regel mit einem Transportgas (beispielsweise Stickstoff) unterschiedlich vom vorgesehenen Füllgas (beispielsweise Wasserstoff) zum Rücktransport gefüllt werden oder abwechselnd je nach Anforderung mit unterschiedlichen Füllgasen gefüllt werden sollen, müssen die Druckbehälter vor dem Befüllen mit dem vorgesehenen Füllgas vielmals gespült werden, damit das einzufüllende Füllgas mit dem gewünschten Reinheitsgrad (beispielsweise reiner als 99,9% oder reiner als 99,999%) in den Druckbehälter eingefüllt werden kann. Die Spülprozeduren zur Erlangung des kundenseitig definierten Reinheitsgrades sind aufwendig und teuer, da das Spülen des Druckbehälters mit dem Füllgas vorgenommen werden muss und gegebenenfalls eine Vielzahl an Befüllungen mit Füllgas vorgenommen werden müssen, um zum spezifizierten Reinheitsgrad zu kommen. Die Befüllungen vor Erreichung des spezifizierten Reinheitsgrades sind somit verbrauchte Gasmischungen und damit Abfall.

Es ist daher wünschenswert, einen Druckbehälter und ein entsprechendes Befüllverfahren zur Verfügung zu haben, mit dem der Aufwand der Spülung vermindert und der Gasverbrauch zur Erlangung des gewünschten Reinheitsgrades gesenkt werden kann.

### Zusammenfassung der Erfindung

Es ist eine Aufgabe der vorliegenden Erfindung, einen Druckbehälter und ein entsprechendes Befüllverfahren bereitzustellen, mit dem der Aufwand der Spülung vermindert und der Gasverbrauch zur Erlangung des gewünschten Reinheitsgrades gesenkt werden kann.

Diese Aufgabe wird gelöst durch einen Druckbehälter umfassend einen Innenbehälter aus einem Innenbehältermaterial mit einem zylindrischen Mittelteil mit einer Zylinderachse und mit zwei das zylindrische Mittelteil abschließenden Polkappen zur Bereitstellung eines Speichervolumens im Druckbehälter, eine auf den Innenbehälter zu dessen Verstärkung aufgebrachte Außenschicht, ein Ventilanschlussstück angeordnet auf einer der Polkappen zur Befüllung und Entleerung des Speichervolumens mit einem Füllgas mit einem gewünschten Reinheitsgrad und eine hohlförmige nach außen offene Spüllanze, die durch das Ventilanschlussstück hindurchgeführt und darin gegenüber dem Ventilanschlussstück abdichtend gehalten ist, wobei die Spüllanze in das Speichervolumen hineinragt und entlang ihrer gesamten Länge bis zu einem ersten Ende der Spüllanze zugewandt zu der dem Ventilanschlussstück gegenüberliegenden Polkappe im Speichervolumen für einen Gasaustausch mit dem Speichervolumen mit einer Perforation versehen ist, wobei sich die Spüllanze soweit zu der dem Ventilanschlussstück gegenüberliegenden Polkappe erstreckt, dass sich der Gasaustausch durch die Perforation der Spüllanze hindurch bis zur gegenüberliegenden Polkappe erstreckt, wobei dass das erste Ende der Spüllanze mit der dem Ventilanschluss gegenüberliegenden Polkappe geeignet verbunden ist und wobei die gegenüberliegende Polkappe ein geeignet ausgeführtes Loslager zur Fixierung der Spüllanze gegen Bewegungen senkrecht zur Zylinderachse (ZA) des Innenbehälters umfasst, in dem die Spüllanze dennoch parallel zur Zylinderachse (ZA) des Innenbehälters beweglich reversibel gelagert ist.

Der Druckbehälter kann dabei für Füllgase aller Art verwendet werden, vorzugsweise wird der Druckbehälter für leicht flüchtige Gase wie Wasserstoff verwendet. Der Innenbehälter kann dabei aus einem Innenbehältermaterial vorzugsweise Kunststoff, beispielsweise PE, PA, PP hergestellt sein. Diese Materialien bieten eine sehr geringe Gaspermeabilität für beispielsweise Wasserstoff. Die Außenschicht kann ebenfalls aus jedem dafür geeigneten Material hergestellt sein. Bei einer Außenschicht aus Faserverbundmaterial besteht dieses aus Fasern eingebettet in einem Matrixmaterial zur Bereitstellung einer besonders hohen mechanischen Belastbarkeit der Außenschicht des Druckbehälters. Somit wird die Funktionalität der Gasdichtigkeit durch den Innenbehälter und die mechanische Belastbarkeit durch die Außenschicht für den Druckbehälter bereitgestellt. Die Spüllanze kann dauerstabil oder demontierbar mit dem Ventilanschlussstück verbunden sein. Die Perforation der Spüllanze ermöglicht ein über die gesamte Länge des Druckbehälters homogenes Einströmen des Füllgases und sorgt für ausreichende Durchmischung des Füllgases mit der bereits vorhandenen Gasfüllung im Druckbehälter. Auf diese Weise wird verhindert, dass sich im Druckbehälter bei der Befüllung eine Zone geringer oder gar fehlender Durchmischung ausbilden kann. Eine solche Zone bildet sich dann aus, wenn die bei der Befüllung vorhandene Gasfüllung nicht durch ein zweites Ventil (wie am erfindungsgemäßen Druckbehälter eben nicht vorhanden) am gegenüberliegenden Ende entweichen kann.

Die Spüllanze kann aus jedem geeigneten Material hergestellt sein, dass einerseits mit einer Perforation für einen Gasaustausch aus der Spüllanze heraus beziehungsweise in die Spüllanze herein versehen werden kannund andererseits die Temperaturbelastung durch die mehrfache Befüllung mit hohem Druck ohne Schäden überstehen kann, beispielsweise EPP. Die Temperaturbelastung im erfindungsgemäßen Druckbehälter beträgt durch die gute Gasdurchmischung und der damit verbundenen besonders hohen Konvektion weniger als 160°C bei einer Befüllung mit 500bar. Gewöhnliche Druckbehälter ohne Spüllanze erreichen dagegen Temperaturen von bis zu 300°C. Die voranstehenden Temperaturen beziehen sich auf lokale Temperaturmaxima im Gas. Die Spülbarkeit des Speichervolumens wird durch das Vorhandensein der erfindungsgemäßen Spüllanze drastisch verbessert, da die Umwälzung der Gasfüllung im Druckbehälter durch die Ausdehnung des Volumens mit direktem Gasaustausch aufgrund der Perforation der Spüllanze in Verbindung mit einer weit in das Speichervolumen hereinragende Spüllanze so ausgedehnt wird, dass alle Bereiche des Speichervolumens einschließlich des Bereichs direkt an der gegenüberliegenden Polkappe am Gasaustausch teilnehmen. Dadurch kann die Anzahl der für den gewünschten Reinheitsgrad des Füllgases im Druckbehälter benötigten Befüll- und Entleerungszyklen selbst bei hohen Reinheitsgraden auf gegebenenfalls weniger als drei reduziert werden. Bei niedrigen Reinheitsgraden werden gegenwärtige Druckbehälter nach dem Stand der Technik mindestens dreimal, bei hohen gewünschten Reinheitsgraden mindestens fünfmal gespült. Die Kostenersparnis für beispielsweise Wasserstoff als Füllgas ist beträchtlich. Die eingesparte Prozesszeit bei der Befüllung der Druckbehälter trägt zusätzlich zur Kosteneinsparung bei.

Der erfindungsgemäße Druckbehälter ermöglicht es somit, den Aufwand der Spülung zu vermindern und den Gasverbrauch zur Erlangung des gewünschten Reinheitsgrades zu senken.

Das erste Ende der Spüllanze ist mit der dem Ventilanschluss gegenüberliegenden Polkappe geeignet verbunden. Damit ist die Spüllanze im Speichervolumen beidseitig fixiert, sodass Stöße gegen den Druckbehälter nicht mehr dazu führen können, dass die Spüllanze gegen den Innenbehälter schlägt und diesen beschädigen kann. Dadurch kann der Druckbehälter in jeder Position transportiert werden, ohne dass dadurch ein Risiko besteht, dass die Spüllanze während des Transports innen gegen den Innenbehälter schlagen kann.

Die gegenüberliegende Polkappe umfasst ein geeignet ausgeführtes Loslager zur Fixierung der Spüllanze gegen Bewegungen senkrecht zur Zylinderachse des Innenbehälters, in dem die Spüllanze dennoch parallel zur Zylinderachse des Innenbehälters beweglich reversibel gelagert ist. Das Loslager stellt eine Führung dar, in der die Spüllanze eingeführt und gehalten wird, ohne dass die Spüllanze darin in ihrer Längsrichtung (Richtung entlang der Zylinderachse des Innenbehälters) fest fixiert ist. Dadurch wird die Spüllanze selbst bei Längenänderungen des Druckbehälters aufgrund der Druckbefüllung ohne Spannungen in ihrer Längsrichtung so gelagert, dass die Spüllanze senkrecht zu Längsrichtung keine Bewegungen ausführen kann und somit nicht den Innenbehälter dadurch beschädigen kann. Das Loslager kann jede für diesen Zweck geeignete Form besitzen. Das Material des Loslagers ist vorzugsweise dasselbe Material wie das des Innenbehälters.

In einer Ausführungsform ist die Spüllanze zumindest in dem Bereich innerhalb des Speichervolumens aus einem formstabilen Material gefertigt. Die Formstabilität erleichtert das Einführen der Spüllanze in das Speichervolumen und verhindert eine Beschädigung des Innenbehälters beim Einführen der Lanze durch Entlangkratzen an der Innenseite des Innenbehälters.

In einer weiteren Ausführungsform ist das formstabile Material ein Kunststoff, der weicher als das Material des Innenbehälters. Der Begriff "weicher" bezieht sich dabei den Härtegrad eines Materials. Je weniger hart ein Material ist, desto weicher ist es. Beispielsweise für Kunststoffmaterialien für Innenbehälter und Lanze ist es vorteilhaft, wenn das Lanzenmaterial einen geringeren Shore-Wert als das Material des Innenbehälters besitzt, wobei Shore-A weiche Materialien und Shore-D dazu vergleichsweise härtere Materialien bezeichnet. PE-LD-Material besitzt einen Härte Shore-D, während beispielsweise Gummi eine Härte Shore-A besitzt. Insofern wäre eine Lanze aus Gummi in einem Innenbehälter aus PE-LD konform mit obiger Ausführungsform. Dadurch werden Beschädigungen des Innenbehälters bei freihängenden Lanzen oder beim Einführen von Lanzen im Falle von Berührungen der Innenseite des Innenbehälters durch die Spüllanze verhindert. Gegenüber metallischen Lanzen besteht der weitere Vorteil, dass diese bei Anschluss an eine Rohrverbindung in einem Transportcontainer oftmals materialbedingt einen Ermüdungsbruch erleiden, sodass die Lanze in den Druckbehälter fällt und den Innenbehälter beschädigt. Außerdem ist die abgebrochene Lanze nur schwer wieder aus dem Behälter zu entfernen. Diese Nachteile werden mit einem Spüllanze aus einem Kunststoffmaterial vermieden.

In einer weiteren Ausführungsform ist das Loslager als hohle Hülse mit einem Innendurchmesser gleich oder größer als ein Außendurchmesser der Spüllanze zumindest im Bereich der gegenüberliegenden Polkappe ausgestaltet, wobei die Hülse einen sich in Richtung des Ventilanschlussstücks öffnenden Einführtrichter umfasst. Dieses Loslager ist einfach zu fertigen und die Spüllanze leicht in die Hülse als Loslager einzuführen, wobei der Einführtrichter die Einführung erleichtert, da er selbst bei Abweichungen der Spüllanze von der Zylinderachse das erste Ende sicher aufnehmen kann.

In einer weiteren Ausführungsform ist das Loslager aus einem dehnfähigen Material gefertigt. Dadurch wird das erste Ende gegen einen gewissen Widerstand in das Loslager eingeführt, indem die Spüllanze das Loslager leicht dehnen muss, sofern der Innendurchmesser des Loslagers kleiner ist als der Außendurchmesser der Spüllanze, was zu einem festeren Sitz der Spüllanze in dem Loslager führt. Sind die Größenverhältnisse anders herum, so dämpft zumindest das dehnfähige Material die Weiterleitung etwaige Stöße auf den Druckbehälter zu der Spüllanze.

In einer weiteren Ausführungsform ist die Spüllanze über geeignete Mittel reversibel mit dem Ventilanschlussstück verbunden, was das Entfernen der Spüllanze bei Bedarf ermöglicht, beispielsweise zu Wartungszwecken.

In einer weiteren Ausführungsform ist das Material der Spüllanze so steif, dass beim Absaugen einer Gasfüllung des Speichervolumens durch die Spüllanze hindurch diese formstabil bleibt und nicht in ihrer Form kollabiert. Dies ermöglicht zuverlässige Mehrfachzyklen von Befüllung und Entleerung zur Herstellung einer gewünschten Gasreinheit bei der Befüllung des Speichervolumens ohne Beeinträchtigung des Gasstroms des ausströmenden Gases beim Abpumpen der Gasfüllung.

Einer weiteren Ausführungsform umfasst die Perforation der Spüllanze Gaseinlass- und Gasauslassöffnungen, deren Anzahl, Position und Durchmesser so dimensioniert sind, dass sowohl eine Durchmischung einer Gasfüllung im Speichervolumen als auch Befüllungs- und Entleerungszeiten des Speichervolumens mit dem Füllgas optimiert sind. Hierbei können die Durchmesser der Öffnungen, Löcher oder Schlitze als Perforation und deren Abstände zueinander variieren. Die Perforation sollte ferner so gestaltet sein, dass geforderte Befüllungszeiten und Flussgeschwindigkeiten des Füllgases beziehungsweise der Gasfüllung durch die Spüllanze ermöglicht werden. Eine größere Menge an Einlass- und Auslassöffnungen (wobei die Gaseinlassöffnungen selbst auch die Gasauslassöffnungen darstellen können) verringert die Befüllungs- und Entleerungszeiten, gerade eine größere Anzahl dieser Öffnungen im Bereich des ersten Endes erhöht die Gasdurchmischung im Bereich der gegenüberliegenden Polkappe, wodurch das "untere" Gas durch die Befüllung durch das Speichervolumen geströmt wird.

Die Erfindung betrifft des Weiteren einen Transportcontainer umfassend eine Vielzahl an erfindungsgemäßen Druckbehältern, deren Speichervolumina über ein gemeinsames verschließbares Rohrsystem über die jeweiligen Ventilanschlussstücke und einem jeweiligen zweiten Ende der Spüllanze miteinander verbunden sind. Druckbehälter werden gewöhnlich in einer entsprechenden Transporteinheit, hier ein Container, unter Verbindung der einzelnen Speichervolumina transportiert. Dabei kann der Gasinhalt der Container über das Rohrsystem kontrolliert werden. Die Druckbehälter werden in der vom Container vorgesehenen Transportausrichtung transportiert, hier beispielsweise in einer vertikalen Ausrichtung, wo aus Sicherheitsgründen die Ventilanschlüsse vorzugsweise auf der Oberseite angeordnet sind, sodass die Spüllanze sich von Ventilanschlussstück vertikal nach unten in den Druckbehälter erstreckt.

Der erfindungsgemäße Transportcontainer ermöglicht es somit, den Aufwand der Spülung zu vermindern und den Gasverbrauch zur Erlangung des gewünschten Reinheitsgrades zu senken.

In einer Ausführungsform ist das Rohrsystem dazu mit einer Vorrichtung zur Befüllung der Druckbehälter mit dem Füllgas und zum Abpumpen der Gasfüllung in den Druckbehältern verbunden. Dadurch kann die Transportzeit oder Standzeit im Container genutzt werden, um das Speichervolumen zu spülen. Die Vorrichtung kann beispielsweise eine Kombination aus einer Pumpvorrichtung und einer Gaseinlassvorrichtung für einen externen Gastank oder Gaszuleitung sein.

Die Erfindung betrifft des Weiteren ein Verfahren zum Befüllen eines erfindungsgemäßen Druckbehälters mit einem Füllgas mit einem gewünschten Reinheitsgrad im Druckbehälter, der einen Innenbehälter aus einem Innenbehältermaterial mit einem zylindrischen Mittelteil mit einer Zylinderachse und mit zwei das zylindrischen Mittelteil abschließenden Polkappen zur Bereitstellung eines Speichervolumens im Druckbehälter, eine auf den Innenbehälter zu dessen Verstärkung aufgebrachte Außenschicht, ein Ventilanschlussstück angeordnet auf einer der Polkappen und eine hohlförmige nach außen offene durch das Ventilanschlussstück hindurchgeführte und darin gegenüber dem Ventilanschlussstück abdichtend gehaltene Spüllanze umfasst, umfassend die nachfolgenden Schritte:
- Befüllen des Druckbehälters mit dem Füllgas für einen Gasaustausch mit dem Speichervolumen durch die Spüllanze, die in das Speichervolumen hineinragt und entlang ihrer gesamten Länge bis zu einem ersten Ende der Spüllanze zugewandt zu der dem Ventilanschlussstück gegenüberliegenden Polkappe im Speichervolumen mit einer Perforation versehen ist;
- Ausführen des Gasaustausches bis zur gegenüberliegenden Polkappe, indem sich die Spüllanze dafür geeignet weit zu der dem Ventilanschlussstück gegenüberliegenden Polkappe erstreckt;
- nachfolgendes Abpumpen der entsprechend durchmischten Gasfüllung im Druckbehälter mittels einer geeigneten Vorrichtung durch die Spüllanze hindurch nach außerhalb des Druckbehälters; und
- Wiederholen der vorangegangenen Schritte bis die Gasfüllung im Druckbehälter dem Füllgas mit dem gewünschten Reinheitsgrad entspricht.

Die Gaszusammensetzung der Gasfüllung kann dabei beim Abpumpen durch eine entsprechende Analysevorrichtung gemessen werden, um zu bestimmen, ob ein weiterer Befüllungs- und Abpumpzyklus für den gewünschten Reinheitsgrad durchlaufen werden muss. Auf die Gasanalyse kann verzichtet werden, wenn ausreichend Erfahrung mit der Befüll- und Abpumpprozedur besteht, sodass sich der Reinheitsgrad alleine aus der Anzahl der Befüll- und Abpumpzyklen ergibt.

Das erfindungsgemäße Verfahren ermöglicht es somit, den Aufwand der Spülung zu vermindern und den Gasverbrauch zur Erlangung des gewünschten Reinheitsgrades zu senken.

Die Erfindung betrifft des Weiteren ein Verfahren zur Herstellung eines erfindungsgemäßen Druckbehälters umfassend die nachfolgenden Schritte:
- Bereitstellen eines Innenbehälters aus einem Innenbehältermaterial mit einem zylindrischen Mittelteil mit einer Zylinderachse und mit zwei das zylindrische Mittelteil abschließenden Polkappen zur Bereitstellung eines Speichervolumens, der zu dessen Verstärkung eine darauf aufgebrachte Außenschicht umfasst, wobei ein Ventilanschlussstück auf einer der Polkappen zur Aufnahme eines Ventils zum Verschließen des Speichervolumens umfasst;
- Hindurchführen einer hohlförmigen nach außen offenen Spüllanze durch das Ventilanschlussstück hindurch, wobei die Spüllanze dazu ausgestaltet ist, in das Speichervolumen hineinzuragen und entlang ihrer gesamten Länge bis zu einem ersten Ende der Spüllanze zugewandt zu der dem Ventilanschlussstück gegenüberliegenden Polkappe im Speichervolumen für einen Gasaustausch mit dem Speichervolumen mit einer Perforation versehen ist, wobei sich die Spüllanze soweit zu der dem Ventilanschlussstück gegenüberliegenden Polkappe erstreckt, dass sich der Gasaustausch durch die Perforation der Spüllanze hindurch bis zur gegenüberliegenden Polkappe erstreckt; und
- Fixieren der Spüllanze am Ventilanschlussstück, damit diese vom Ventilanschlussstück abdichtend gegenüber dem Ventilanschlussstück gehalten wird.

Das erfindungsgemäße Verfahren ermöglicht es somit, einen Druckbehälter herzustellen, mit dem der Aufwand der Spülung vermindert und der Gasverbrauch zur Erlangung des gewünschten Reinheitsgrades gesenkt werden kann.

### Kurze Beschreibung der Abbildungen

Diese und andere Aspekte der Erfindung werden im Detail in den Abbildungen wie folgt gezeigt.
- Fig.1:: zwei Ausführungsformen des erfindungsgemäßen Druckbehälters im seitlichen Schnitt (a) mit freischwebender Spüllanze und (b) mit Spüllanze befestigt an beiden Enden;
- Fig.2:: eine Ausführungsform des Druckbehälters mit Spüllanze in einer Ausschnittdarstellung;
- Fig.3:: eine Ausführungsform des erfindungsgemäßen Transportcontainers;
- Fig.4:: eine Ausführungsform des erfindungsgemäßen Verfahrens zum Befüllen des erfindungsgemäßen Druckbehälters;
- Fig.5:: eine Ausführungsform des erfindungsgemäßen Verfahrens zur Herstellung des erfindungsgemäßen Druckbehälters.

### Detaillierte Beschreibung der Ausführungsbeispiele

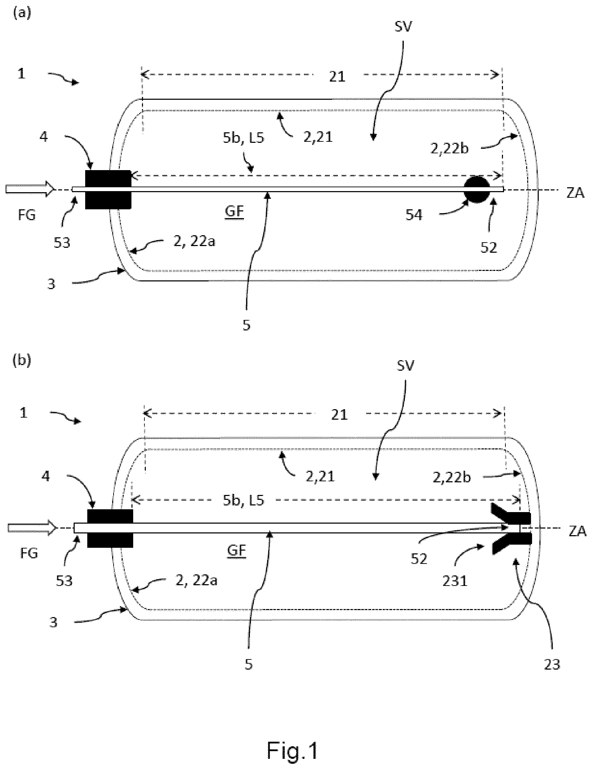

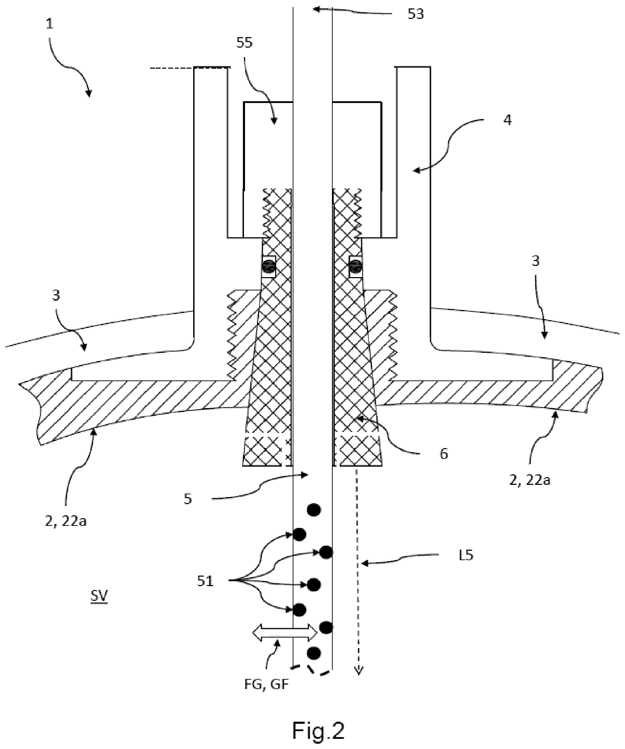

Fig.1 zeigt zwei Ausführungsformen des Druckbehälters 1 im seitlichen Schnitt (a) mit freischwebender Spüllanze 5 und (b) als erfindungsgemäße Ausführungsform mit Spüllanze 5 befestigt an beiden Enden 52, 53. Der Druckbehälter 1 umfasst einen Innenbehälter 2 aus einem Innenbehältermaterial mit einem zylindrischen Mittelteil 21 mit einer Zylinderachse ZA und mit zwei das zylindrische Mittelteil 21 abschließenden Polkappen 22a, 22b zur Bereitstellung eines Speichervolumens SV im Druckbehälter. Auf den Innenbehälter 2 ist zu dessen mechanischer Verstärkung eine Außenschicht 3 aufgebracht, beispielsweise eine aus Faserverbundmaterial gewickelte Außenschicht. Das Ventilanschlussstück 4 zur Befüllung und Entleerung des Speichervolumens SV mit einem Füllgas FG mit einem gewünschten Reinheitsgrad RG ist auf einer der Polkappen 22a angeordnet, während die gegenüberliegende Polkappe 22b keinen solchen Anschluss umfasst. Da das Ventilanschlussstück 4 eine Verbindung in das Speichervolumen SV bereitstellt, ist eine hohlförmige nach außen offene Spüllanze 5 durch das Ventilanschlussstück 4 hindurchgeführt und darin gegenüber dem Ventilanschlussstück 4 abdichtend gehalten. Diese Spüllanze 5 ragt in das Speichervolumen SV soweit hineinragt und ist entlang ihrer gesamten Länge L5 bis zu einem ersten Ende 52 zugewandt zu der dem Ventilanschlussstück 4 gegenüberliegenden Polkappe 22b im Speichervolumen SV für einen Gasaustausch mit dem Speichervolumen mit einer Perforation 51 versehen. Die Spüllanze 5 erstreckt sich dabei soweit zur gegenüberliegenden Polkappe 22b, dass sich der Gasaustausch durch die Perforation 51 der Spüllanze 5 hindurch bis zur gegenüberliegenden Polkappe 22b erstreckt. Die Spüllanze 5 ist dabei zumindest in dem Bereich 5b innerhalb des Speichervolumens SV aus einem formstabilen Material gefertigt, beispielsweise aus einem Kunststoff, der weicher als das Material des Innenbehälters 2 ist. Das Material der Spüllanze 5 ist allerdings so steif, dass beim Absaugen einer Gasfüllung GF des Speichervolumens SV durch die Spüllanze 5 hindurch diese formstabil bleibt und nicht in ihrer Form kollabiert. In Fig.1a ist das erste Ende 52 der Spüllanze 5 freischwebend im Speichervolumen SV des Druckbehälters 1 angeordnet (nicht beansprucht). In dieser Ausführungsform ist am ersten Ende 52 der Spüllanze 5 zusätzlich ein Zusatzgewicht 54 angeordnet. Der Begriff "am ersten Ende" bezeichnet dabei neben dem ersten Ende 52 auch einen umgebenden Bereich, wo hier das Zusatzgewicht 54, beispielsweise eine Kugel aus Metall oder Blei befestigt ist. In Fig. 1b ist die beanspruchte Ausführungsform dargestellt, wobei das erste Ende 52 der Spüllanze 5 mit der dem Ventilanschluss 4 gegenüberliegenden Polkappe 22b über ein Loslager 23 verbunden ist, was Bewegungen der Spüllanze 5 senkrecht zur Zylinderachse ZA des Innenbehälters 2 verhindert. Trotzdem ist die Spüllanze 5 parallel zur Zylinderachse ZA des Innenbehälters 2 beweglich reversibel gelagert, um Längenveränderungen des Druckbehälters 1 bei der Druckbefüllung ausgleichen zu können. Das Loslager 23 ist hier als hohle Hülse mit einem Innendurchmesser gleich dem Außendurchmesser der Spüllanze 5 ausgestaltet, wobei die Hülse 23 einen sich in Richtung des Ventilanschlussstücks 4 öffnenden Einführtrichter 231 umfasst. Das Loslager 23 kann aus einem dehnfähigen Material gefertigt sein. Die Spüllanze 5 ist ferner über geeignete Mittel reversibel mit dem Ventilanschlussstück 4 verbunden (siehe dazu auch Fig.2).

Fig.2 zeigt eine Ausführungsform des Druckbehälters 1 mit Spüllanze 5 in einer Ausschnittdarstellung des Bereichs der Polkappe 22a am Ventilanschlussstück 4, das hier mittels einer Schraubverbindung auf die Polkappe 22a befestigt ist und mittels eines Dichtkonus 6 gegenüber dem Innenbehälter 2 abdichtet. Dieser ist zur Verstärkung mit einer Außenschicht 3 versehen. Die Perforation 51 der Spüllanze 5 umfasst Gaseinlass- und Gasauslassöffnungen, deren Anzahl, Position und Durchmesser so dimensioniert sind, dass sowohl eine Durchmischung einer Gasfüllung GF im Speichervolumen SV als auch Befüllungs- und Entleerungszeiten des Speichervolumens SV mit dem Füllgas FG optimiert sind. Die hier gezeigten kreisförmigen Perforierungen 51 sind nur ein Beispiel für mögliche Perforierungen 5. In anderen Ausführungsformen kann die Spüllanze auch längliche, ovale oder anders geformte Perforierungen 5 umfassen. Auch kann der Abstand und die Größe der Perforierungen 5 je nach Ausführungsform variieren.

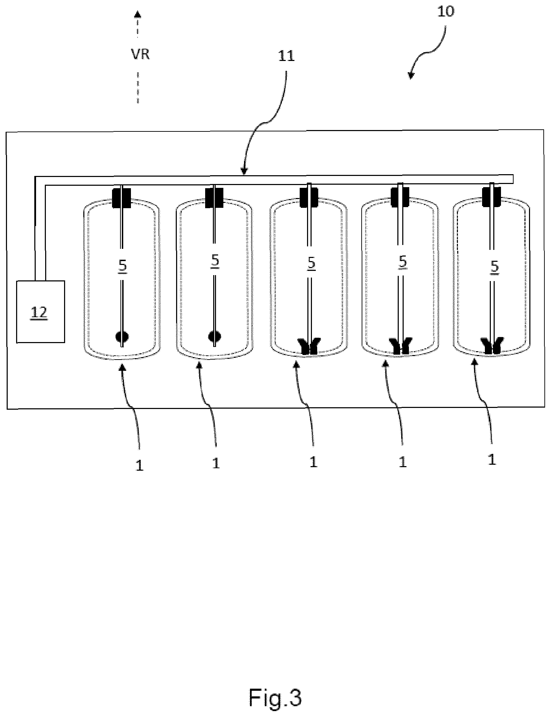

Fig.3 zeigt eine Ausführungsform des erfindungsgemäßen Transportcontainers 10, der hier beispielsweise fünf erfindungsgemäße Druckbehältern 1 umfasst, wobei zwei der Druckbehälter 1 freischwebende Spüllanzen 5 und die anderen drei Druckbehälter 1 beidseitig fixierte Spüllanzen 5 enthalten. Zu den Details der Druckbehälter 1 wird auf Fig.1 verwiesen. Die Speichervolumina SV der Druckbehälter 1 sind über ein gemeinsames verschließbares Rohrsystem 11 über die jeweiligen Ventilanschlussstücke 4 und einem jeweiligen zweiten Ende 53 der Spüllanzen 5 miteinander verbunden, wobei das Rohrsystem 11 außerdem mit einer Vorrichtung 12 zur Befüllung der Druckbehälter 1 mit dem Füllgas und zum Abpumpen der Gasfüllung in den Druckbehältern 1 verbunden ist. Eine solche Vorrichtung 12 im Transportcontainer 10 ermöglicht es, den Aufwand der Spülung zu vermindern und den Gasverbrauch zur Erlangung des gewünschten Reinheitsgrades RG zu senken. Wasserstoff-Transportcontainer nach dem Stand der Technik werden mindestens 3 ― 6 Mal gespült (abhängig vom gewünschten Reinheitsgrad des Füllgases), um das Leer-Transportgas Stickstoff vor der nächsten Befüllung wieder zu entfernen. Bei einer angenommenen Speicherkapazität eines 40-Fuß-Containers von 1000kg Wasserstoff und einem Wasserstoffpreis von 7 EUR/kg ergibt sich pro Spülen ein Betrag von verbrauchtem Wasserstoff in Höhe von 7000 EUR. Ein fünfmaliges Spülen verbraucht somit Wasserstoff in Höhe von 35.000 EUR. Inklusive des erhöhten Arbeitsaufwands liegen die Spülkosten bei fünfmaligem Spülen insgesamt bei ca. 50.000 EUR. Mit dem erfindungsgemäßen Druckbehälter 1 können aufgrund der Spüllanze 5 die Hälfte der Spülkosten eingespart werden. Für eine Reinheit 5.0 (entspricht einer Reinheit von 99,999%) benötigt man mit dem erfindungsgemäßen Druckbehälter 1 nur drei Spülungen, während Druckbehälter nach dem Stand der Technik dafür sechs oder mehr Spülungen benötigen.

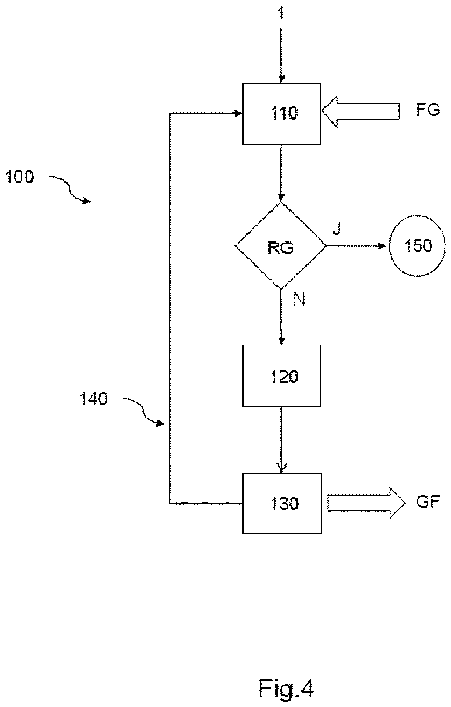

Fig.4 zeigt eine Ausführungsform des erfindungsgemäßen Verfahrens 100 zum Befüllen des erfindungsgemäßen Druckbehälters 1 (siehe dazu auch Fig.1 und 2) mit einem Füllgas FG mit einem gewünschten Reinheitsgrad RG im Druckbehälter 1, umfassend die nachfolgenden Schritte des Befüllens 110 des Druckbehälters 1 mit dem Füllgas FG für einen Gasaustausch mit dem Speichervolumen SP durch die Spüllanze 5, die in das Speichervolumen SV hineinragt und entlang ihrer gesamten Länge L5 bis zu einem ersten Ende 52 der Spüllanze 5 zugewandt zur dem Ventilanschlussstück 4 gegenüberliegenden Polkappe 22b im Speichervolumen SV mit einer Perforation 51 versehen ist; des Ausführens 120 des Gasaustausches bis zur gegenüberliegenden Polkappe 22b, indem sich die Spüllanze 5 dafür geeignet weit zu der dem Ventilanschlussstück 4 gegenüberliegenden Polkappe 22b erstreckt; des nachfolgenden Abpumpens 130 der entsprechend durchmischten Gasfüllung GF im Druckbehälter 1 mittels einer geeigneten Vorrichtung 12 durch die Spüllanze 5 hindurch nach außerhalb des Druckbehälters; und des Wiederholens 140 der vorangegangenen Schritte bis die Gasfüllung GF im Druckbehälter dem Füllgas FG mit dem gewünschten Reinheitsgrad RG entspricht. Hierbei kann zweckmäßigerweise die Gaszusammensetzung der abgepumpten Gasfüllung gemessen werden. Sofern diese den gewünschten Reinheitsgrad aufweist, braucht danach der Druckbehälter 1 nur noch einmal mit dem Füllgas gefüllt werden, um das Speichervolumen sicher mit Füllgas mit gewünschtem Reinheitsgrad zu füllen. Danach stoppt 150 der Befüllprozess 100, da der gewünschte Reinheitsgrad RG erreicht ist.

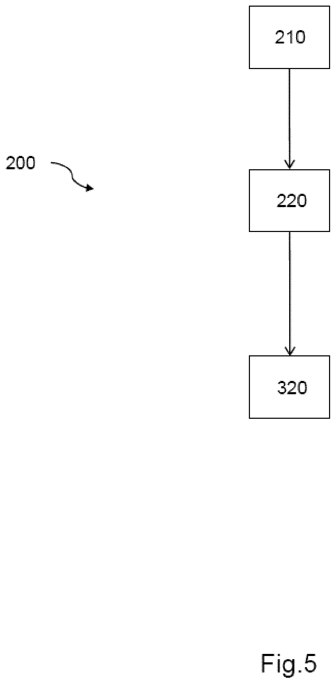

Fig.5 zeigt eine Ausführungsform des erfindungsgemäßen Verfahrens 200 zur Herstellung des erfindungsgemäßen Druckbehälters 1 umfassend die nachfolgenden Schritte des Bereitstellens 210 eines Druckbehälters wie in Fig.1 gezeigt ohne Spüllanze 5, des Hindurchführens 220 einer hohlförmigen nach außen offenen Spüllanze 5 durch das Ventilanschlussstück 4 hindurch, wobei die Spüllanze 5 dazu ausgestaltet ist, in das Speichervolumen SV hineinzuragen und entlang ihrer gesamten Länge L5 bis zu einem ersten Ende 52 der Spüllanze 5 zugewandt zur dem Ventilanschlussstück 4 gegenüberliegenden Polkappe 22b im Speichervolumen SV für einen Gasaustausch mit dem Speichervolumen mit einer Perforation 51 versehen ist, wobei sich die Spüllanze 5 soweit zur dem Ventilanschlussstück 4 gegenüberliegenden Polkappe 22b erstreckt, dass sich der Gasaustausch durch die Perforation 51 der Spüllanze 5 hindurch bis zur gegenüberliegenden Polkappe 22b erstreckt; und des Fixierens 230 der Spüllanze 5 am Ventilanschlussstück 4, damit diese vom Ventilanschlussstück 4 abdichtend gegenüber dem Ventilanschlussstück 4 gehalten wird. Auf den so hergestellten Druckbehälter 1 kann nun das Verfahren gemäß Fig.4 angewendet werden.

Die hier gezeigten Ausführungsformen stellen nur Beispiele für die vorliegende Erfindung dar und dürfen daher nicht einschränkend verstanden werden.

Alternative durch den Fachmann in Erwägung gezogene Ausführungsformen sind gleichermaßen vom Schutzbereich der vorliegenden Ansprüche umfasst.

### LISTE DER BEZUGSZEICHEN

- 1: Druckbehälter
- 2: Innenbehälter
- 21: zylindrisches Mittelteil
- 22a: abschließende Polkappe auf Seiten des Ventilanschlussstücks
- 22b: gegenüberliegende Polkappe
- 23: Loslager auf der gegenüberliegenden Polkappe
- 231: sich öffnender Einführtrichter
- 3: Außenschicht aus Faserverbundmaterial
- 4: Ventilanschlussstück
- 5: Spüllanze
- 5b: Bereich der Spüllanze im Speichervolumen
- 51: Perforation
- 52: erstes Ende der Spüllanze
- 53: zweites Ende der Spüllanze
- 54: Zusatzgewicht
- 55: Mittel zur Befestigung der Spüllanze am Ventilanschlussstück
- 6: Dichtkonus
- 10: erfindungsgemäßer Transportcontainer
- 11: Rohrsystem
- 12: Vorrichtung zur Befüllung der Druckbehälter mit Füllgas und zum Abpumpen der Gasfüllung in den Druckbehältern
- 100: Verfahren zum Befüllen eines erfindungsgemäßen Druckbehälters
- 110: Befüllen des Druckbehälters mit dem Füllgas für einen Gasaustausch mit dem Speichervolumen
- 120: Ausführen des Gasaustausches bis zur gegenüberliegenden Polkappe
- 130: nachfolgendes Abpumpen der entsprechend durchmischten Gasfüllung
- 140: Wiederholen der vorangegangenen Schritte
- 150: Ende des Befüllungsverfahrens
- 200: Verfahren zur Herstellung eines erfindungsgemäßen Druckbehälters
- 210: Bereitstellen eines Druckbehälters ohne Spülllanze
- 220: Hindurchführen einer Spüllanze durch das Ventilanschlussstück hindurch
- 230: Fixieren der Spüllanze am Ventilanschlussstück
- FG: Füllgas zur Füllung des Speichervolumens
- GF: Gasfüllung des Speichervolumens
- L5: Länge der Spüllanze im Speichervolumen
- RG: gewünschter Reinheitsgrad der Gasfüllung im Druckbehälter
- SV: Speichervolumen
- VR: vertikale Richtung
- ZA: Zylinderachse

## Patentansprüche

1. Ein Druckbehälter (1) umfassend einen Innenbehälter (2) aus einem Innenbehältermaterial mit einem zylindrischen Mittelteil (21) mit einer Zylinderachse (ZA) und mit zwei das zylindrische Mittelteil (21) abschließenden Polkappen (22a, 22b) zur Bereitstellung eines Speichervolumens (SV) im Druckbehälter, eine auf den Innenbehälter (2) zu dessen Verstärkung aufgebrachte Außenschicht (3), ein Ventilanschlussstück (4) angeordnet auf einer der Polkappen (22a) zur Befüllung und Entleerung des Speichervolumens (SV) mit einem Füllgas (FG) mit einem gewünschten Reinheitsgrad (RG) und eine hohlförmige nach außen offene Spüllanze (5), die durch das Ventilanschlussstück (4) hindurchgeführt und darin gegenüber dem Ventilanschlussstück (4) abdichtend gehalten ist, wobei die Spüllanze (5) in das Speichervolumen (SV) hineinragt und entlang ihrer gesamten Länge (L5) bis zu einem ersten Ende (52) der Spüllanze (5) zugewandt zu der dem Ventilanschlussstück (4) gegenüberliegenden Polkappe (22b) im Speichervolumen (SV) für einen Gasaustausch mit dem Speichervolumen mit einer Perforation (51) versehen ist, wobei sich die Spüllanze (5) soweit zu der dem Ventilanschlussstück (4) gegenüberliegenden Polkappe (22b) erstreckt, dass sich der Gasaustausch durch die Perforation (51) der Spüllanze (5) hindurch bis zur gegenüberliegenden Polkappe (22b) erstreckt, **dadurch gekennzeichnet, dass** das erste Ende (52) der Spüllanze (5) mit der dem Ventilanschluss (4) gegenüberliegenden Polkappe (22b) geeignet verbunden ist, wobei die gegenüberliegende Polkappe (22b) ein geeignet ausgeführtes Loslager (23) zur Fixierung der Spüllanze (5) gegen Bewegungen senkrecht zur Zylinderachse (ZA) des Innenbehälters (2) umfasst, in dem die Spüllanze (5) dennoch parallel zur Zylinderachse (ZA) des Innenbehälters (2) beweglich reversibel gelagert ist.

2. Der Druckbehälter (1) nach Anspruch 1,
**dadurch gekennzeichnet,**
**dass** die Spüllanze (5) zumindest in dem Bereich (5b) innerhalb des Speichervolumens (SV) aus einem formstabilen Material gefertigt ist.

3. Der Druckbehälter (1) nach Anspruch 2,
**dadurch gekennzeichnet,**
**dass** das formstabile Material ein Kunststoff ist, der weicher als das Material des Innenbehälters (2) ist.

4. Der Druckbehälter (1) nach einem der vorherigen Ansprüche,
**dadurch gekennzeichnet,**
**dass** das Loslager (23) als hohle Hülse mit einem Innendurchmesser gleich oder größer als ein Außendurchmesser der Spüllanze (5) zumindest im Bereich der gegenüberliegenden Polkappe (22b) ausgestaltet ist, wobei die Hülse (23) einen sich in Richtung des Ventilanschlussstücks (4) öffnenden Einführtrichter (231) umfasst.

5. Der Druckbehälter (1) nach einem der vorherigen Ansprüche,
**dadurch gekennzeichnet,**
**dass** das Loslager (23) aus einem dehnfähigen Material gefertigt ist.

6. Der Druckbehälter (1) nach einem der voranstehenden Ansprüche,
**dadurch gekennzeichnet,**
**dass** die Spüllanze (5) über geeignete Mittel reversibel mit dem Ventilanschlussstück (4) verbunden ist.

7. Der Druckbehälter (1) nach einem der voranstehenden Ansprüche,
**dadurch gekennzeichnet,**
**dass** das Material der Spüllanze (5) so steif ist, dass beim Absaugen einer Gasfüllung (GF) des Speichervolumens (SV) durch die Spüllanze (5) hindurch diese formstabil bleibt und nicht in ihrer Form kollabiert.

8. Der Druckbehälter (1) nach einem der voranstehenden Ansprüche,
**dadurch gekennzeichnet,**
**dass** die Perforation (51) der Spüllanze (5) Gaseinlass- und Gasauslassöffnungen (511) umfasst, deren Anzahl, Position und Durchmesser so dimensioniert sind, dass sowohl eine Durchmischung einer Gasfüllung (GF) im Speichervolumen (SV) als auch Befüllungs- und Entleerungszeiten des Speichervolumens (SV) mit dem Füllgas (FG) optimiert sind.

9. Ein Transportcontainer (10) umfassend eine Vielzahl an Druckbehältern (1) nach Anspruch 1, deren Speichervolumina (SV) über ein gemeinsames verschließbares Rohrsystem (11) über die jeweiligen Ventilanschlussstücke (4) und einem jeweiligen zweiten Ende (53) der Spüllanze (5) miteinander verbunden sind.

10. Der Transportcontainer (10) nach Anspruch 9,
**dadurch gekennzeichnet,**
**dass** das Rohrsystem (11) mit einer Vorrichtung (12) zur Befüllung der Druckbehälter (1) mit dem Füllgas und zum Abpumpen der Gasfüllung in den Druckbehältern (1) verbunden ist.

11. Ein Verfahren (100) zum Befüllen eines Druckbehälters (1) nach Anspruch 1 mit einem Füllgas (FG) mit einem gewünschten Reinheitsgrad (RG) im Druckbehälter (1), der einen Innenbehälter (2) aus einem Innenbehältermaterial mit einem zylindrischen Mittelteil (21) mit einer Zylinderachse (ZA) und mit zwei das zylindrischen Mittelteil (21) abschließenden Polkappen (22a, 22b) zur Bereitstellung eines Speichervolumens (SV) im Druckbehälter, eine auf den Innenbehälter (2) zu dessen Verstärkung aufgebrachte Außenschicht (3), ein Ventilanschlussstück (4) angeordnet auf einer der Polkappen (22a) und eine hohlförmige nach außen offene durch das Ventilanschlussstück (4) hindurchgeführte und darin gegenüber dem Ventilanschlussstück (4) abdichtend gehaltene Spüllanze (5) umfasst, umfassend die nachfolgenden Schritte:
- Befüllen (110) des Druckbehälters (1) mit dem Füllgas (FG) für einen Gasaustausch mit dem Speichervolumen (SP) durch die Spüllanze (5), die in das Speichervolumen (SV) hineinragt und entlang ihrer gesamten Länge (L5) bis zu einem ersten Ende (52) der Spüllanze (5) zugewandt zu der dem Ventilanschlussstück (4) gegenüberliegenden Polkappe (22b) im Speichervolumen (SV) mit einer Perforation (51) versehen ist;
- Ausführen (120) des Gasaustausches bis zur gegenüberliegenden Polkappe (22b), indem sich die Spüllanze (5) dafür geeignet weit zu der dem Ventilanschlussstück (4) gegenüberliegenden Polkappe (22b) erstreckt;
- nachfolgendes Abpumpen (130) der entsprechend durchmischten Gasfüllung (GF) im Druckbehälter (1) mittels einer geeigneten Vorrichtung (12) durch die Spüllanze (5) hindurch nach außerhalb des Druckbehälters; und
- Wiederholen (140) der vorangegangenen Schritte bis die Gasfüllung (GF) im Druckbehälter dem Füllgas (FG) mit dem gewünschten Reinheitsgrad (RG) entspricht.

12. Ein Verfahren (200) zur Herstellung eines Druckbehälters (1) nach Anspruch 1 umfassend die nachfolgenden Schritte:
- Bereitstellen (210) eines Innenbehälters (2) aus einem Innenbehältermaterial mit einem zylindrischen Mittelteil (21) mit einer Zylinderachse (ZA) und mit zwei das zylindrischen Mittelteil (21) abschließenden Polkappen (22a, 22b) zur Bereitstellung eines Speichervolumens (SV), der zu dessen Verstärkung eine darauf aufgebrachte Außenschicht (3) umfasst, wobei ein Ventilanschlussstück (4) auf einer der Polkappen (22a) zur Aufnahme eines Ventils zum Verschließen des Speichervolumens umfasst;
- Hindurchführen (220) einer hohlförmigen nach außen offenen Spüllanze (5) durch das Ventilanschlussstück (4) hindurch, wobei die Spüllanze (5) dazu ausgestaltet ist, in das Speichervolumen (SV) hineinzuragen und entlang ihrer gesamten Länge (L5) bis zu einem ersten Ende (52) der Spüllanze (5) zugewandt zu der dem Ventilanschlussstück (4) gegenüberliegenden Polkappe (22b) im Speichervolumen (SV) für einen Gasaustausch mit dem Speichervolumen mit einer Perforation (51) versehen ist, wobei sich die Spüllanze (5) soweit zu der dem Ventilanschlussstück (4) gegenüberliegenden Polkappe (22b) erstreckt, dass sich der Gasaustausch durch die Perforation (51) der Spüllanze (5) hindurch bis zur gegenüberliegenden Polkappe (22b) erstreckt; und
- Fixieren (230) der Spüllanze (5) am Ventilanschlussstück (4), damit diese vom Ventilanschlussstück (4) abdichtend gegenüber dem Ventilanschlussstück (4) gehalten wird.

## Claims

1. Pressure vessel (1), comprising an inner vessel (2) produced from an inner vessel material having a cylindrical middle part (21) with a cylinder axis (ZA) and having two terminal caps (22a, 22b) that seal the cylindrical middle part (21) so as to provide a storage volume (SV) in the pressure vessel, an outer layer (3), which is applied to the inner vessel (2) in order to reinforce said inner vessel, a valve connection piece (4) that is arranged on one of the terminal caps (22a) so as to fill and empty the storage volume (SV) with a filling gas (FG) at a desired degree of purity (RG), and a hollow flushing lance (5) that is open to the outside and is guided through the valve connection piece (4) and held therein in a sealing manner with respect to the valve connection piece (4), wherein the flushing lance (5) protrudes into the storage volume (SV) and is provided with a perforation (51) along its entire length (L5) up to a first end (52) of the flushing lance (5) facing the terminal cap (22b) that is lying opposite the valve connection piece (4) in the storage volume (SV) for a gas exchange with the storage volume, wherein the flushing lance (5) extends so far to the terminal cap (22b), which is lying opposite the valve connection piece (4), that the gas exchange extends through the perforation (51) of the flushing lance (5) up to the opposite-lying terminal cap (22b),
**characterized in**
**that** the first end (52) of the flushing lance (5) is suitably connected to the terminal cap (22b) opposite the valve connection piece (4), the opposite terminal cap (22b) comprising a suitably embodied movable bearing (23) for fixing the flushing lance (5) into place against movements vertical to the cylinder axis (ZA) of the inner vessel (2), in which nevertheless the flushing lance (5) is reversibly supported in parallel to the cylinder axis (ZA) of the inner vessel (2).

2. Pressure vessel (1) according to claim 1, **characterized in that** the flushing lance (5) is made, at least in the area (5b) inside the storage volume (SV), of a dimensionally stable material.

3. Pressure vessel (1) according to Claim 2, **characterized in that** the dimensionally stable material is a synthetic material that is softer than the material of the inner vessel (2).

4. Pressure vessel (1) according to one of the above Claims, **characterized in that** the movable bearing (23) is formed as a hollow sleeve with an inner diameter equal to or larger than an outer diameter of the flushing lance (5), at least in the area of the opposite terminal cap (22b), the sleeve (23) comprising an insertion funnel (231) which opens in the direction of the valve connection piece (4).

5. Pressure vessel (1) according to one of the above Claims, **characterized in that** the movable bearing (23) is made of an elastic material.

6. Pressure vessel (1) according to one of the preceding claims, **characterized in that** the flushing lance (5) is connected in a reversible manner by way of suitable means to the valve connection piece (4).

7. Pressure vessel (1) according to one of the preceding claims, **characterized in that** the material of the flushing lance (5) is so stiff that as a gas filling (GF) is drawn off by means of suction from the storage volume (SV) through the flushing lance (5), said flushing lance remains dimensionally stable and its shape does not collapse.

8. Pressure vessel (1) according to one of the preceding claims, **characterized in that** the perforation (51) of the flushing lance (5) comprises gas inlet openings and gas outlet openings (511), whose number, position and diameter are dimensioned such that both a gas filling (GF) is thoroughly mixed in the storage volume (SV) and also that the durations of the procedures of filling and emptying the storage volume (SV) with the filling gas (FG) are optimized.

9. Transport container (10) comprising a plurality of pressure vessels (1) according to claim 1, whose storage volumes (SV) are connected to one another by way of a common sealable pipe system (11) by way of the respective valve connection pieces (4) and a respective second end (53) of the flushing lance (5).

10. Transport container (10) according to claim 9, **characterized in that** the pipe system (11) is connected to a device (12) so as to fill the pressure vessel (1) with the filling gas and to pump out the gas filling that is located within the pressure vessels (1).

11. Method (100) for filling a pressure vessel (1) according to claim 1 with a filling gas (FG) at a desired degree of purity (RG) in the pressure vessel (1) that comprises an inner vessel (2) produced from an inner vessel material having a cylindrical middle part (21) having a cylinder axis (ZA) and having two terminal caps (22a, 22b) that seal the cylindrical middle part (21) so as to provide a storage volume (SV) in the pressure vessel, said pressure vessel comprising an outer layer (3), which is applied to the inner vessel (2) in order to reinforce said inner vessel, a valve connection piece (4) that is arranged on one of the terminal caps (22a), and a hollow flushing lance (5) that is open to the outside and is guided through the valve connection piece (4) and held therein in a sealing manner with respect to the valve connection piece (4), said method comprising the following steps:
filling (110) the pressure vessel (1) with the filling gas (FG) for a gas exchange with the storage volume (SP) by way of the flushing lance (5) that protrudes into the storage volume (SV) and is provided with a perforation (51) along its entire length (L5) up to a first end (52) of the flushing lance (5) facing the terminal cap (22b) that is lying opposite the valve connection piece (4) in the storage volume (SV);
performing (120) the gas exchange up to the opposite-lying terminal cap (22b), in that the flushing lance (5) suitable for this purpose extends as far as up to the terminal cap (22b) that lies opposite the valve connection piece (4);
subsequently pumping out (130) the accordingly thoroughly-mixed gas filling (GF) that is located in the pressure vessel (1) by means of a suitable device (12) through the flushing lance (5) to the exterior of the pressure vessel; and
repeating (140) the previous steps until the gas filling (GF) in the pressure vessel corresponds to the filling gas (FG) at the desired degree of purity (RG).

12. Method (200) for producing a pressure vessel (1) according to Claim 1, said method comprising the following steps:
providing (210) an inner vessel (2) produced from an inner vessel material having a cylindrical middle part (21) with a cylinder axis (ZA) and having two terminal caps (22a, 22b) that seal the cylindrical middle part (21) so as to provide a storage volume (SV), said inner vessel comprising an outer layer (3) that is applied thereto in order to reinforce said inner vessel, wherein a valve connection piece (4) on one of the terminal caps (22a) is comprised so as to receive a valve in order to seal the storage volume;
guiding (220) a hollow flushing lance (5) that is open to the outside through the valve connection piece (4), wherein the flushing lance (5) is configured so as to protrude into the storage volume (SV) and is provided with a perforation (51) along its entire length (L5) up to a first end (52) of the flushing lance (5) facing the terminal cap (22b) that is lying opposite the valve connection piece (4) in the storage volume (SV) for a gas exchange with the storage volume, wherein the flushing lance (5) extends so far to the terminal cap (22b), which lies opposite the valve connection piece (4), that the gas exchange extends through the perforation (51) of the flushing lance (5) up to the opposite-lying terminal cap (22b); and
fixing (230) the flushing lance (5) to the valve connection piece (4) so that said flushing lance is held by the valve connection piece (4) in a sealing manner with respect to the valve connection piece (4).

## Revendications

1. Réservoir sous pression (1) comprenant un réservoir intérieur (2) dans un matériau de réservoir intérieur avec une partie centrale cylindrique (21) avec un axe cylindrique (ZA) et avec deux calottes polaires (22a, 22b) fermant la partie centrale cylindrique (21) pour fournir un volume de stockage (SV) dans le réservoir sous pression, une couche extérieure (3) appliquée sur le réservoir intérieur (2) pour le renforcement de celui-ci, une pièce de raccord de vanne (4) disposée sur une des calottes polaires (22a) pour le remplissage et la vidange du volume de stockage (SV) avec un gaz de remplissage (FG) avec un degré de pureté (RG) souhaité et une lance de rinçage (5) creuse ouverte vers l'extérieur, qui est passée à travers la pièce de raccord de vanne (4) et y est maintenue hermétique par rapport à la pièce de raccord de vanne (4), sachant que la lance de rinçage (5) fait saillie dans le volume de stockage (SV) et est dotée d'une perforation (51) le long de toute sa longueur (L5) jusqu'à une première extrémité (52) de la lance de rinçage (5) tournée vers la calotte polaire (22b) dans le volume de stockage (SV) opposée à la pièce de raccord de vanne (4) pour un échange de gaz avec le volume de stockage, sachant que la lance de rinçage (5) s'étend vers la calotte polaire (22b) opposée à la pièce de raccord de vanne (4) de telle sorte que l'échange de gaz s'étend à travers la perforation (51) de la lance de rinçage (5) jusqu'à la calotte polaire opposée (22b), **caractérisé en ce que** la première extrémité (52) de la lance de rinçage (5) est reliée de façon appropriée à la calotte polaire (22b) opposée au raccord de vanne (4), sachant que la calotte polaire opposée (22b) comprend un palier libre (23) exécuté de façon appropriée pour la fixation de la lance de rinçage (5) envers tous mouvements perpendiculairement à l'axe cylindrique (ZA) du réservoir intérieur (2), dans lequel la lance de rinçage (5) est toutefois logée mobile de façon réversible parallèlement à l'axe cylindrique (ZA) du réservoir intérieur (2).

2. Réservoir sous pression (1) selon la revendication 1,
**caractérisé en ce que**
la lance de rinçage (5) est fabriquée dans un matériau indéformable au moins dans la zone (5b) à l'intérieur du volume de stockage (SV).

3. Réservoir sous pression (1) selon la revendication 2,
**caractérisé en ce que**
le matériau indéformable est une matière plastique, qui est plus molle que le matériau du réservoir intérieur (2).

4. Réservoir sous pression (1) selon l'une quelconque des revendications précédentes,
**caractérisé en ce que**
le palier libre (23) est configuré en tant que manchon creux avec un diamètre intérieur égal ou plus grand qu'un diamètre extérieur de la lance de rinçage (5) au moins dans la zone de la calotte polaire opposée (22b), sachant que le manchon (23) comprend un entonnoir d'insertion (231) s'ouvrant en direction de la pièce de raccord de vanne (4).

5. Réservoir sous pression (1) selon l'une quelconque des revendications précédentes,
**caractérisé en ce que**
le palier libre (23) est fabriqué dans un matériau expansible.

6. Réservoir sous pression (1) selon l'une quelconque des revendications précédentes,
**caractérisé en ce que**
la lance de rinçage (5) est reliée de façon réversible par le biais de moyens appropriés à la pièce de raccord de vanne (4).

7. Réservoir sous pression (1) selon l'une quelconque des revendications précédentes,
**caractérisé en ce que**
le matériau de la lance de rinçage (5) est à tel point rigide que celle-ci reste indéformable lors de l'aspiration d'un remplissage de gaz (GF) du volume de stockage (SV) à travers la lance de rinçage (5) et ne se rétracte pas dans sa forme.

8. Réservoir sous pression (1) selon l'une quelconque des revendications précédentes,
**caractérisé en ce que**
la perforation (51) de la lance de rinçage (5) comprend des ouvertures d'entrée et de sortie de gaz (511), dont le nombre, la position et les diamètres sont dimensionnés de telle sorte qu'on optimise aussi bien un brassage d'un remplissage de gaz (GF) dans le volume de stockage (SV) que les temps de remplissage et de vidange du volume de stockage (SV) avec le gaz de remplissage (FG).

9. Conteneur de transport (10) comprenant une pluralité de réservoirs sous pression (1) selon la revendication 1, dont les volumes de stockage (SV) sont reliés entre eux par le biais d'un système de tuyauterie (11) fermant commun par les pièces de raccord de vanne respectifs (4) et une deuxième extrémité respective (53) de la lance de rinçage (5).

10. Conteneur de transport (10) selon la revendication 9,
**caractérisé en ce que**
le système de tuyauterie (11) est relié à un dispositif (12) pour le remplissage des réservoirs sous pression (1) avec le gaz de remplissage et pour le pompage du remplissage de gaz dans les réservoirs sous pression (1).

11. Procédé (100) de remplissage d'un réservoir sous pression (1) selon la revendication 1 avec un gaz de remplissage (FG) avec un degré de pureté (RG) souhaité dans le réservoir sous pression (1), qui comprend un réservoir intérieur (2) composé d'un matériau de réservoir intérieur avec une partie centrale cylindrique (21) avec un axe cylindrique (ZA) et avec deux calottes polaires (22a, 22b) fermant la partie centrale cylindrique (21) pour fournir un volume de stockage (SV) dans le réservoir sous pression, une couche extérieure (3) appliquée sur le réservoir intérieur (2) pour le renforcement de celui-ci, une pièce de raccord de vanne (4) disposée sur une des calottes polaires (22a) et une lance de rinçage (5) creuse ouverte vers l'extérieur passée à travers la pièce de raccord de vanne (4) et maintenue dedans de façon hermétique par rapport à la pièce de raccord de vanne (4), comprenant les étapes suivantes :
- remplissage (110) du réservoir sous pression (1) avec le gaz de remplissage (FG) pour un échange de gaz avec le volume de remplissage (SP) par la lance de rinçage (5), qui fait saillie dans le volume de stockage (SV) et est dotée d'une perforation (51) le long de toute sa longueur (L5) jusqu'à une première extrémité (52) de la lance de rinçage (5) tournée vers la calotte polaire (22b) dans le volume de stockage (SV) opposée à la pièce de raccord de vanne (4),
- exécution (120) de l'échange de gaz jusqu'à la calotte polaire opposée (22b), dans laquelle s'étend à cet effet la lance de rinçage (5) de façon appropriée suffisamment loin vers la calotte polaire (22b) opposée à la pièce de raccord de vanne (4),
- pompage ultérieur (130) du remplissage de gaz (GF) mélangé de façon correspondante dans le réservoir sous pression (1) au moyen d'un dispositif (12) approprié à travers la lance de rinçage (5) vers l'extérieur du réservoir sous pression, et
- répétition (140) des étapes précédentes jusqu'à ce que le remplissage de gaz (GF) dans le réservoir sous pression corresponde au gaz de remplissage (FG) avec le degré de pureté (RG) souhaité.

12. Procédé (200) de fabrication d'un réservoir sous pression (1) selon la revendication 1, comprenant les étapes suivantes :
- fourniture (210) d'un réservoir intérieur (2) dans un matériau de réservoir intérieur avec une partie centrale cylindrique (21) avec un axe cylindrique (ZA) et avec deux calottes polaires (22a, 22b) fermant la partie centrale cylindrique (21) pour fournir un volume de stockage (SV), qui comprend pour le renforcement de celui-ci une couche extérieure (3) appliquée dessus, sachant qu'il comprend une pièce de raccord de vanne (4) sur une des calottes polaires (22a) pour recevoir une vanne pour fermer le volume de stockage,
- passage (220) d'une lance de rinçage (5) creuse ouverte vers l'extérieur à travers la pièce de raccord de vanne (4), sachant que la lance de rinçage (5) est configurée pour faire saillie dans le volume de stockage (SV) et est dotée d'une perforation (51) le long de toute sa longueur (L5) jusqu'à une première extrémité (52) de la lance de rinçage (5) tournée vers la calotte polaire (22b) dans le volume de stockage (SV) opposée à la pièce de raccord de vanne (4) pour un échange de gaz avec le volume de stockage, sachant que la lance de rinçage (5) s'étend vers la calotte polaire (22b) opposée à la pièce de raccord de vanne (4) si loin que l'échange de gaz s'étend à travers la perforation (51) de la lance de rinçage (5) jusqu'à la calotte polaire opposée (22b), et
- fixation (230) de la lance de rinçage (5) sur la pièce de raccord de vanne (4) afin que celle-ci soit maintenue par la pièce de raccord de vanne (4) de façon hermétique par rapport à la pièce de raccord de vanne (4).
